Europäisches Patentamt

European Patent Office

Office européen des brevets

(11) Veröffentlichungsnummer: **0 194 645 B1**

(19)

(12) # EUROPÄISCHE PATENTSCHRIFT

(45) Veröffentlichungstag der Patentschrift: **02.01.92**

(21) Anmeldenummer: **86103238.1**

(22) Anmeldetag: **11.03.86**

(51) Int. Cl.⁵: **H02G 15/113**

(54) **Vorgefertigte Garnitur.**

(30) Priorität: **12.03.85 DE 3508727**

(43) Veröffentlichungstag der Anmeldung:
**17.09.86 Patentblatt 86/38**

(45) Bekanntmachung des Hinweises auf die
Patenterteilung:
**02.01.92 Patentblatt 92/01**

(84) Benannte Vertragsstaaten:
**AT BE CH DE FR GB IT LI NL SE**

(56) Entgegenhaltungen:
**DE-A- 1 490 809**
**DE-A- 2 733 603**
**DE-A- 3 210 225**
**DE-A- 3 309 879**
**US-A- 1 519 108**

(73) Patentinhaber: **ABB Kabel und Draht GmbH**
**Casterfeldstrasse 62-64**
**W-6800 Mannheim 24(DE)**

(72) Erfinder: **Fabian, Wolfgang**
**Weissenseeweg 11**
**W-6800 Mannheim 81(DE)**
Erfinder: **Fenske, Hans-Dietmar, Dipl.-Ing.**
**Alpirsbacher Weg 3**
**W-6800 Mannheim 61(DE)**
Erfinder: **Leonhardt, Gottfried, Dipl.-Ing.**
**Lüderitzstrasse 33**
**W-6800 Mannheim 81(DE)**

(74) Vertreter: **Rupprecht, Klaus, Dipl.-Ing. et al**
**c/o Asea Brown Boveri Aktiengesellschaft**
**Zentralbereich Patente Postfach 100351**
**W-6800 Mannheim 1(DE)**

## Beschreibung

Die Erfindung betrifft eine vorgefertigte Garnitur zum Anschluß eines geschirmten, kunststoffisolierten Starkstromkabels an eine mit Durchführung versehene elektrische Anlage, insbesondere an einen Transformator oder eine gekapselte Schaltanlage, mit einem Isolierkörper aus elastischem Kunststoff, vorzugsweise Silikonkautschuk, und einem metallenen, mehrteiligen Gehäuse, welches den Isolierkörper umgibt.

Eine solche Garnitur ist in der DE-A-33 09 879 vorbeschrieben. Dort wird aber darauf abgestellt, daß zwischen dem Isolierkörper und dem Metallgehäuse ein elastisches Polster erforderlich sei, wozu der Isolierkörper mit einer äußeren Leitschicht aus elektrisch leitendem, jedoch elastischem Material versehen ist (vgl. auch DE-A-27 26 403).

Das winkelförmige Gehäuse wird dort längs der Symmetrieachse entlang einer festen, nicht näher beschriebenen Naht gefaltet und auf der gegenüberliegenden Seite mittels zahlreicher Laschen, vorzugsweise mittels Verschraubungen oder Vernietungen, miteinander verbunden.

Diese vorbekannte Gehäusekonstruktion stellt sicherheitstechnische Gesichtspunkte voran. Anderen Anforderungen ist nicht genügend Rechnung getragen. Dies gilt in erster Linie für die Möglichkeit einer schnellen problemlosen Montage, in zweiter Linie aber auch im Hinblick auf ein möglichst unverzerrtes elektrisches Feld im Isolierkörper.

Aus der DE-A-1 490 809 ist eine insbesondere für Fernmeldekabel geeignete Kabelschutzmuffe bekannt, die zwei gleiche, voneinander trennbare aus einem mechanisch festen und korrosionsbeständigen Kunststoff bestehende Halbschalen besitzt, die ihrerseits durch zwei über die verjüngten Enden der Halbschalen zu schiebende Spannringe zusammengehalten werden. Für Starkstromkabel ist eine derartige Kabelschutzmuffe weniger geeignet, da es problematisch ist, diese anlagenseitig mit einem Spannring zu versehen.

Weiterhin ist es aus der US-A-1,519,108 bekannt, die beiden Halbschalen einer Kabelgarnitur durch ineinandergreifende formschlüssige Verbindungsorgane zusammenzufügen, indem diese jeweils an den beiden sich gegenüberliegenden Fugen der Gehäuseschalen angeordnet sind. Dies bedingt allerdings eine ausreichende Flexibilität der beiden Gehäuseschalen, da nur unter entsprechender Krafteinwirkung ein Zusammenschnappen der beiden formschlüssigen Verbindungsorgane erreichbar ist. Bei einer Garnitur mit starren Gehäusehalbschalen ist somit diese Fügemethode nicht anwendbar.

Schließlich ist aus der DE-A-3 210 225 noch eine steckbare Garnitur in knieförmiger Ausgestaltung bekannt, die zum Anschluß eines kunststoffisolierten geschirmten Starkstromkabels an ein elektrisches Gerät dient, und bei der der elastische Isolierkörper von einem elektrisch leitenden Gehäuse umgeben ist. Das Gehäuse umgibt den Isolierkörper mit einem vorgegebenen Abstand und besteht aus zwei Halbschalen, die am Fuß der geräteseitigen Einführung des Isolierkörpers auf einer umlaufenden Schulter des Islierkörpers aufliegen.

Aufgabe der Erfindung ist es daher, eine Garnitur mit einem Gehäuse bzw. einer Metallkapselung zu schaffen, das die vorgenannten Nachteile des Standes der Technik beseitigt, das auch für T- und winkelförmige Garnituren geeignet ist und eine rasche Montage gestattet. Weiterhin soll das Gehäuse für Isolierkörper geeignet sein, die ohne das elektrische Feld eventuell verzerrende Erhöhungen oder Vertiefungen, also einschließlich der äußeren Leitschicht mit glatter runder Oberfläche ausgestattet sind.

Zur Lösung dieser Aufgabe ist gemäß der Erfindung vorgesehen, daß das Gehäuse im wesentlichen aus zwei einzelnen, trennbaren Halbschalen besteht, welche kabelseitig mittels eines aufschieb- oder verschraubbaren Ringes oder dergleichen und welche anlagenseitig mittels wenigstens je einem im Bereich der Fuge an jeder Gehäusehalbschale vorgesehenen formschlüssigen Verbindungsorgan lösbar verbindbar sind.

Soweit die Erfindung auf eine T-förmige Garnitur angewandt wird, besteht das Gehäuse wiederum aus zwei Halbschalen, die zwei sich gegenüberliegende über das Knie bis zum kabelseitigen Fuß verlaufende Fugen bilden sowie eine dritte, stirnseitig parallel zur Geräteanschlußachse verlaufende Fuge, in deren Bereich die formschlüssigen Verbindungsorgane vorgesehen sind.

Soweit die Erfindung auf eine Winkel-Garnitur angewandt wird, ergeben sich zwei Fugen, die innenliegende kürzere und die außenliegende längere Fuge, und die formschlüssigen Verbindungsorgane befinden sich zumindest im Bereich der parallel zur Geräteanschlußachse außen verlaufenden Fuge.

Diese Verbindungsorgane sind bevorzugt im Fugenbereich an die aneinanderstoßenden Gehäusehalbschalen angebracht. Die ineinanderwirkenden Verbindungsorgane können einerseits angeformt sein, insbesondere durch entsprechende Falzung, andererseits auch angegossen durch entsprechende Ausbildung der Gußform. Weiterhin bevorzugt ist das Anbringen ineinandergreifender Teile bzw. ganz allgemein derart geformter Verbindungsorgane, daß die beiden Halbschalen zunächst mit deren Hilfe formschlüssig ineinander verhak- bzw. miteinander verbindbar sind in einer etwas ausgestellten Stellung und sodann in die parallele Endstellung zusammengedrückt werden unter Umschließung des Isolierkörpers, wonach diese Stellung zumindest durch einen kabelseitig auf die beiden Gehäusehälften aufschieb- oder aufschraubbaren Ring arretiert wird. Bevorzugt ist auch die Ausbildung der Ringverbindung als Bajonettverschluß.

Bei gerade verlaufender Fuge besteht eine alternative Lösungsmöglichkeit darin, daß die formschlüssigen Verbindungsorgane durch axiales Verschieben der Gehäusehalbschalen ineinander verrasten.

Soweit zur Erfüllung der Teilaufgabe eines unverzerrten elektrischen Feldes von einem Isolierkörper mit glatter zylindrischer Oberfläche ausgegangen wird, sind zur Kontaktierung von Gehäuse und äußerer Leitschicht gemäß der Erfindung bevorzugt längs zu den Gehäuseachsen verlaufende, an die Halbschalen angeformte Rippen oder dgl. vorgesehen. Diese Rippen können sowohl durchgehend als auch unterbrochen ausgebildet sein, wobei sie im Abstand zum Ende des Isolierkörpers enden und in dessen Abwinklungsbereich ebenfalls ausgespart sind. Die Rippen können ggf. auch quer zur Längsachse als Ringwülste am Umfang verlaufen oder als einzelne Nocken ausgebildet sein. Dies alles sind bevorzugte Ausführungsformen der Erfindung. Weitere bevorzugte Ausführungsformen sind in den Unteransprüchen gekennzeichnet.

Im folgenden wird die Erfindung anhand eines Ausführungsbeispieles näher erläutert, aus dem sich weitere Vorteile und Merkmale der Erfindung entnehmen lassen.

In der Zugehörigen Zeichnung zeigt:

Fig. 1    eine T-förmige Garnitur in Seitenansicht;

Fig. 2    eine winkelförmige Garnitur in Seitenansicht;

Fig. 3    einen Schnitt durch ein formschlüssiges Verbindungsorgan, nämlich einen Steckfalz;

Fig. 4    einen Schnitt quer zur Längsachse durch das Gehäuse und andeutungsweise auch durch den von diesem umgebenen Isolierkörper;

Fig. 5    einen Schnitt quer zur Geräteanschlußachse;

Fig. 6    einen Schnitt im Anschlußbereich mit Befestigungsorgan;

Fig. 7    einen Ausschnitt aus einem Gehäuse einer geraden Garnitur mit keilförmigen Verbindungsorganen in der Draufsicht;

Fig. 8    einen Schnitt durch zusammengefügte Halbschalen gemäß Figur 7 im Bereich der Verbindungsorgane.

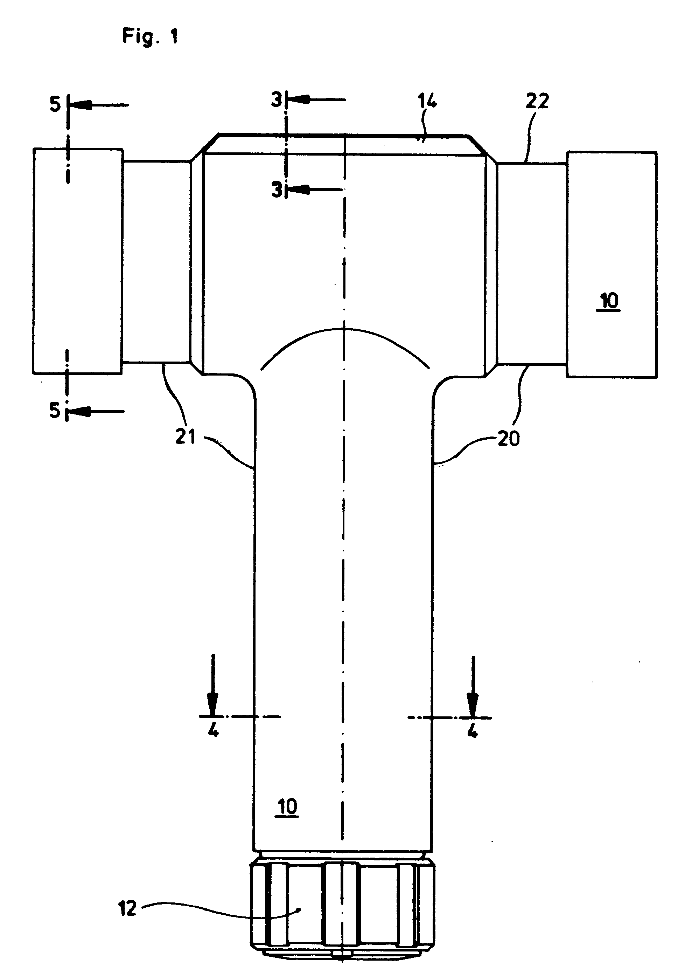

Figur 1 zeigt eine T-förmige Garnitur in der Seitenansicht bzw. in Draufsicht auf eine der beiden Halbschalen 10 des Gehäuses. Die Verbindung mit der zweiten hinter der Zeichnungsebene liegenden Halbschale 11 des Gehäuses erfolgt kabelseitig durch den Ring 12, stirnseitig durch die in der Zeichnung nur angedeutete formschlüssige Verbindung 14. Die zwei sich gegenüberliegenden von der Geräteanschlußseite über das Knie bis zum kabelseitigen Fuß verlaufenden Fugen sind mit 20 bzw. 21 bezeichnet. Im Falle der T-förmigen Garnitur kommt als dritte Fuge die parallel zur Geräteanschlußachse stirnseitig verlaufende Fuge 22 hinzu, in deren Bereich die formschlüssigen Verbindungsorgane vorgesehen bzw. angebracht sind.

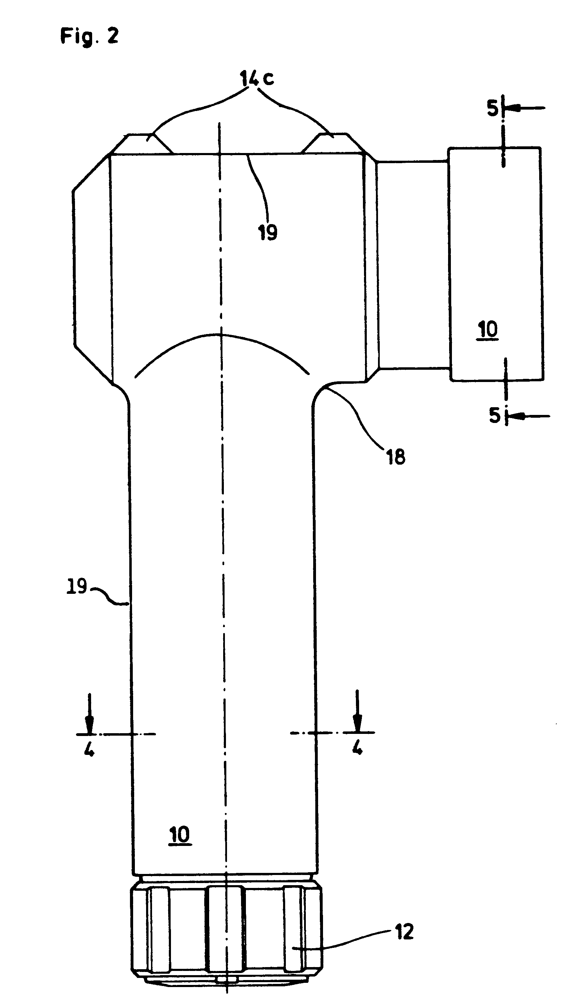

Im Falle der Figur 2, einer winkelförmigen Garnitur, entfällt die dritte Fuge und die Fuge 19 setzt sich nach rechts außen verlaufend fort. In diesem Falle sind die Verbindungsorgane 14c wiederum in dem etwa parallel zur Geräteanschlußachse liegenden Bereich angeordnet.

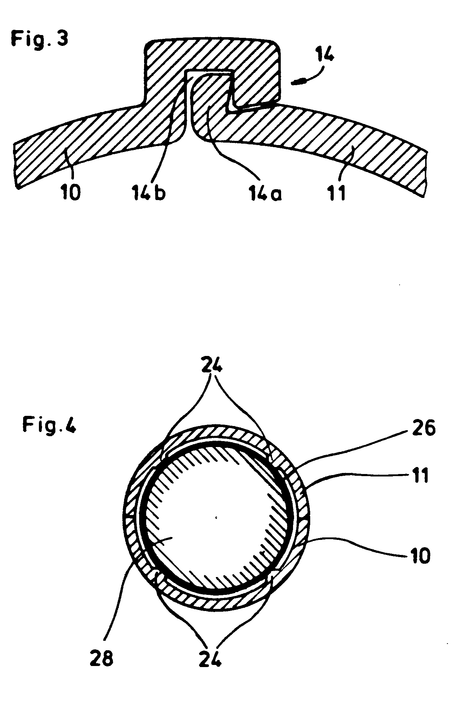

Die Schnittlinie 3-3 der Figur 1 ist in Figur 3 dargestellt soweit diese das Gehäuse betrifft. Das formschlüssige Verbindungsorgan ist hier als Steckfalz 14 ausgebildet, wobei der nach außen gerichtete Steg 14a in die zum Isolierkörper 28 offene Nut 14b eingehakt wird. Die dargestellte Falzverbindung 14 kann, wie in Figur 1 angedeutet, stirnseitig sich über einen größeren und geradlinig verlaufenden Bereich der außenliegenden Fuge erstrecken, doch kann dieser Falz 14 auch aus mehreren kurzen Abschnitten bestehen. Soweit das Gehäuse aus Guß hergestellt ist, sind diese Verbindungsorgane 14 angegossen. Soweit die Gehäusehalbschalen 10, 11 z. B. aus Blech hergestellt sind, ist eine entsprechende Bördelung und Falzung möglich. Neben nut-und federartig ineinandergreifenden Elementen sind z.B. auch Dorne und diese aufnehmende Bohrungen geeignet.

Die in Figur 1 mit 4-4 bezeichnete Schnittstelle ist in der Figur 4 dargestellt. Die beiden Gehäusehalbschalen 10 und 11 weisen längs zur Geräteanschlußachse verlaufende angeformte bzw. angegossene Rippen 24 auf, die nach innen verjüngt und abgerundet ausgebildet sind und einer elektrischen Verbindung mit der äußeren leitfähigen Schicht 26 des Isolierkörpers 28 dienen, andererseits dessen Zentrierung sicherstellen unter Auffangen von Umfangstoleranzen wie sie sich seitens des Kabels auf den Isolierkörper 28 übertragen können. Weiterhin wird durch den zwischen Isolierkörper und Metallgehäuse gegebenen Abstand dem Kunststoffkörper das benötigte thermische Ausdehungsvolumen zur Verfügung gestellt.

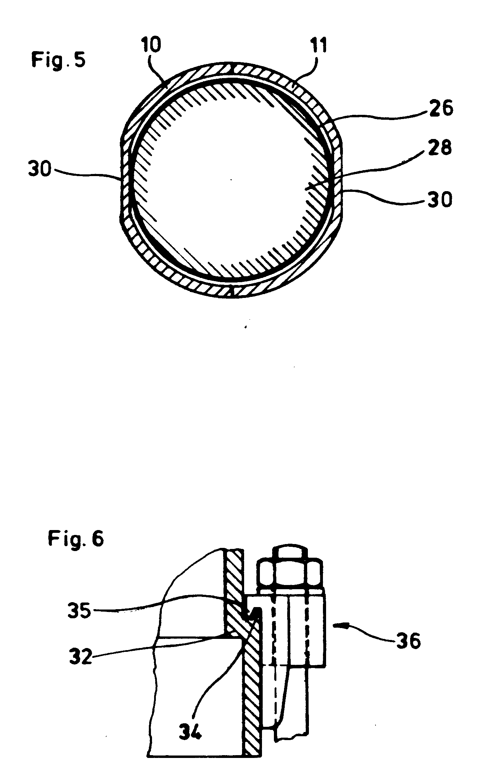

Figur 5 zeigt einen Querschnitt durch das Gehäuse an der in Figur 1 mit 5-5 bezeichneten Stelle. Hier im Endbereich sind in der Regel Rippen 24 nicht vorgesehen, stattdessen werden in bevorzugten Fällen die Gehäusehalbschalen 10, 11 an zwei sich gegenüberliegenden Seiten 30 abgeflacht, und zwar parallel zur Längsachse der Garnitur. Dies hat nicht nur den Vorteil, daß sich an dieser Stelle nochmals die äußere Leitschicht 26 elektrisch leitend mit dem metallenen Gehäuse kontaktiert, sondern daß hier im Bereich des größten Durchmessers der Garnitur eine Größenreduzierung erfolgt, die im Falle kompakt dimensionierter Schaltanlagen Vorteile bieten kann.

Schließlich ist in Figur 6 eine bevorzugte Möglichkeit der Befestigung an die geräte- bzw. anlageseitige Durchführung dargestellt. Das Gehäuse weist eine radial umlaufende Schulter 32 auf mit einer ebenfalls radial umlaufenden außenliegenden Erhöhung 34 oder einem Steg, den ein mit mindestens einer, besser zwei Klauen 35 ausgerüstetes Befestigungsorgan 36 übergreifen kann, das seinerseits z.B. mittels herkömmlicher Gewindestangen an Laschen Gewindebohrungen o.a. Verbindungselementen der meist aus Gießharz bestehenden Durchführung befestigt wird. Die Befestigungsorgane 36 sind vorteilhafterweise an beliebigen Stellen am Umfang anbringbar. In der Regel genügen zwei sich gegenüberliegende Befestigungsorgane 36.

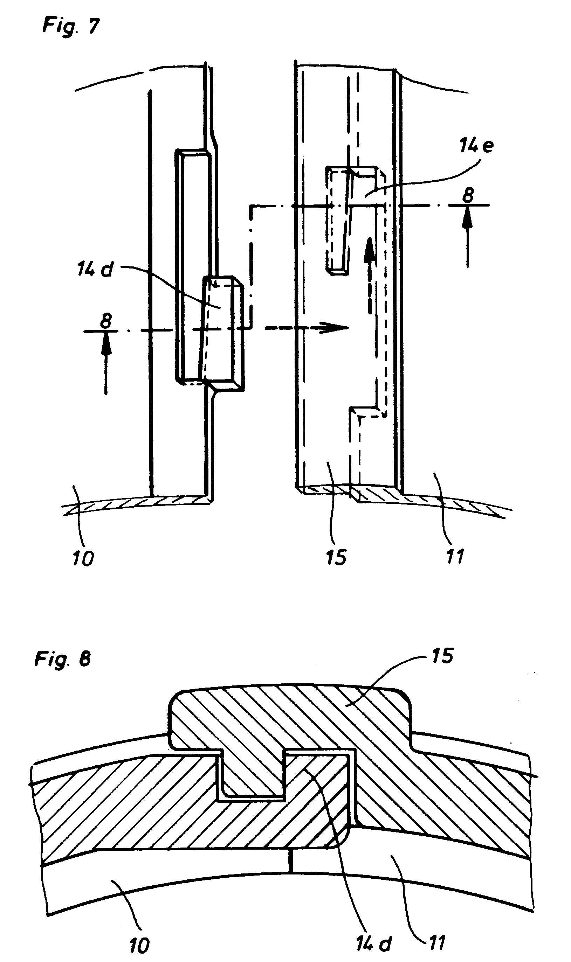

Figur 7 zeigt einen Ausschnitt im anlagenahen Bereich einer gerade gestalteten Garnitur. Die Gehäusehalbschalen 10, 11 sind etwas auseinandergerückt gezeichnet und setzen sich nach oben und unten fort. Um sie zusammenzufügen verfährt man in Pfeilrichtung. Zunächst fügt man beide Halbschalen 10, 11 in radialer Richtung zusammen (unter Einschluß des nichtgezeigten Isolierkörpers). Dabei übergreift der rechte Falz mit erweitertem Durchmesser den Falz der linken Gehäusehalbschale 10. Gegenüber, also unterhalb der Papierebene, geschieht spiegelsymmetrisch dasselbe. Dann wird die insgesamt tiefergelegene linksgezeichnete Gehäusehalbschale 10 gemäß Pfeil axial nach oben gedrückt, wobei das keilförmige Teil 14d mit der entsprechend keilförmig geformten Aussparung 14e in Eingriff kommt, die von außen nicht sichtbar unterhalb der längsgefalzten Abdeckung 15 liegt. Die Verbindungsorgane 14d, 14e sind so angeordnet, daß in Schließstellung des Schiebefalzes beide Halbschalen 10, 11 axial bündig abschließen.

Figur 8 entpsricht der in Figur 7 eingezeichneten Schnittlinie 8-8 im zusammengefügten Zustand, senkrecht zur Längsachse geschnitten.

Die besprochenen Teile sind vorzugsweise aus Aluminium oder Aluminiumlegierungen im Gußverfahren hergestellt. Denkbar ist auch die Verwendung von vorzugsweise isolierenden Kunststoffen. Der Ring 12 kann aus hochfestem Kunststoff oder Metall gefertigt sein. Die Wanddicke der Gehäusehalbschalen 10, 11 liegt in der Regel zwischen 2 und 5 mm.

**Patentansprüche**

1. Vorgefertigte Garnitur zum Anschluß eines geschirmten, kunststoffisolierten Starkstromkabels an eine mit Durchführung versehene elektrische Anlage, insbesondere an einen Transformator oder eine gekapselte Schaltanlage, mit einem Isolierkörper (28) aus elastischem Kunststoff, vorzugsweise Silikonkautschuk, und einem metallenen Gehäuse mit zwei Halbschalen (10,11), welches den Isolierkörper (28) umgibt, dadurch gekennzeichnet, daß das Gehäuse zwei einzelne Halbschalen (10,11) besitzt, welche kabelseitig mittels eines aufschieb- oder aufschraubbaren Ringes oder dergleichen (12) und welche anlagenseitig mittels wenigstens je einem im Bereich der Fuge an jeder Gehäusehalbschale (10,11) vorgesehenen formschlüssigen Verbindungsorgan (14) lösbar verbindbar sind, und daß bei einer Garnitur in T- oder Winkelform die formschlüssigen Verbindungsorgane (14,14c) in einer parallel zur Geräteanschlußachse stirnseitig verlaufenden Fuge (19,22) sich gegenüberliegend angeordnet sind.

2. Garnitur nach Anspruch 1, dadurch gekennzeichnet, daß die formschlüssigen Verbindungsorgane (14) als Steckfalz derart ausgebildet sind, daß ein etwa rechtwinkelig längs der Fuge nach außen aufgerichteter Steg (14a) der einen Gehäusehalbschale (11) in Eingriff bringbar ist mit einer entsprechend ausgebildeten Nut (14b) der anderen Gehäusehalbschale (10).

3. Garnitur nach Anspruch 2, dadurch gekennzeichnet, daß der Steckfalz (14) sich einstückig und geradlinig über einen Teil der parallel zur Geräteanschlußachse verlaufenden Fuge (19 bzw. 22) erstreckt.

4. Vorgefertigte Garnitur zum Anschluß eines geschirmten, kunststoffisolierten Starkstromkabels an eine mit Durchführung versehene elektrische Anlage, insbesondere an einen Transformator oder eine gekapselte Schaltanlage, mit einem Isolierkörper (28) aus elastischem Kunststoff, vorzugsweise Silikonkautschuk, und einem metallenen Gehäuse mit zwei Halbschalen (10,11), welches den Isolierkörper (28) umgibt, dadurch gekennzeichnet, daß das Gehäuse zwei einzelne Halbschalen (10,11) besitzt, welche kabelseitig mittels eines aufschieb- oder aufschraubbaren Ringes oder dergleichen (12) und welche anlagenseitig mittels wenigstens je einem im Bereich der Fuge an jeder Gehäusehalbschale (10,11) vorgesehenen formschlüssigen Verbindungsorgan (14) lösbar verbindbar sind, und daß die formschlüssige Verbindung im anlagennahen Bereich von gerade verlaufenden Fugen mittels dort angeordneter, sich gegenüberliegender und durch axiales Verschieben der Gehäusehalbschalen (10,11) ineinanderverrastender Verbindungsorgane (14d,14e) erfolgt.

5. Garnitur nach Anspruch 4, dadurch gekennzeichnet, daß die Verbindungsorgane die Form eines sich parallel zur Fuge erstreckenden Keils (14d) bzw. eine dazu passende Keilnut (14e) aufweisen.

6. Garnitur nach einem der vorhergehenden Ansprüche, dadurch gekennzeichnet, daß die formschlüssige Verbindung aus mehreren einzelnen, entlang der Fuge (19 bzw. 22) angebrachten Verhakungsorganen (14c) gebildet ist.

7. Garnitur nach einem der vorhergehenden Ansprüche, dadurch gekennzeichnet, daß die kabelseitige Verbindung der beiden Halbschalen (10,11) durch einen einzelnen aufbringbaren, beide Halbschalen umfassenden Ring mit Bajonettverschluß (12) erfolgt.

8. Garnitur nach einem der vorhergehenden Ansprüche, dadurch gekennzeichnet, daß zur Kontaktierung von Gehäuse und äußerer Leitschicht (26) des Isolierkörpers (28) parallel zur Längsachse verlaufende, an die Halbschalen (10,11) angeformte Rippen oder dergleichen (24) vorgesehen sind.

9. Garnitur nach einem der vorhergehenden Ansprüche, dadurch gekennzeichnet, daß vier bis sechs Rippen (24) in etwa gleichen Abständen am inneren Umfang des Gehäuses bzw. der Gehäusehalbschalen (10,11) verteilt sind und eine zum Isolierkörper (28) hinweisende Tiefe von ca. 1 bis 4 mm aufweisen.

10. Garnitur nach einem der vorhergehenden Ansprüche, dadurch gekennzeichnet, daß die Gehäusehalbschalen (10,11) eine Wandstärke von 2 bis 5 mm aufweisen und aus Aluminium-Silizium-Guß hergestellt sind.

11. Garnitur nach einem der vorhergehenden Ansprüche, dadurch gekennzeichnet, daß die Gehäusehalbschalen (10,11) im Bereich der Geräteanschlußachse an zwei sich gegenüberliegenden Seiten (30) derart abgeflacht sind, daß die Gehäuseinnenfläche die äußere Leitschicht (26) des Isolierkörpers (28) berührt und sich zugleich eine besonders kompakte Bauform ergibt.

12. Garnitur nach Anspruch 11, dadurch gekennzeichnet, daß Rippen (24) nur im Bereich des senkrecht zur Geräteanschlußachse liegenden Teiles vorhanden sind.

13. Garnitur nach einem der vorhergehenden Ansprüche, dadurch gekennzeichnet, daß die Gehäusehalbschalen (10,11) im Anschlußbereich eine radial umlaufende Schulter (32) mit außenliegender Erhöhung (34) aufweisen zur Aufnahme von die Schulter (32) übergreifenden Klauen oder dergleichen (35) eines Befestigungsorganes (36) zur Befestigung an der Durchführung der elektrischen Anlage.

## Claims

1. Prefabricated fitting for connecting a screened, plastic-insulated power cable to an electrical installation provided with a duct, especially to a transformer or encapsulated switch gear, having an insulating body (28) of elastic plastic, preferably silicon rubber, and a metallic housing with two half shells (10, 11) which surrounds the insulating body (28), characterised in that the housing has two individual half shells (10, 11) which can be detachably connected on the cable side by means of a push-on or screw-on ring or such like (12) and which can be detachably connected on the installation side by means of in each case at least one positive-locking connecting device (14) provided in the region of the joint to each housing half shell (10, 11), and in that, in the case of a fitting having a T- or angled shape, the positive-locking connecting devices (14, 14c) are arranged opposite one another in a joint (19, 22) running on the end face parallel to the equipment connecting axis.

2. Fitting according to Claim 1, characterised in that the positive-locking connecting devices (14) are designed as a plug-in fold such that a web (14a) of the one housing half shell (11), directed outwards approximately at right angles to the joint, can be engaged with a correspondingly designed slot (14b) of the other housing half shell (10).

3. Fitting according to Claim 2, characterised in that the plug-in fold (14) extends as one piece and in a straight line over a part of the joint (19 or 22) running parallel to the equipment connecting axis.

4. Prefabricated fitting for connecting a screened, plastic-insulated power cable to an electrical installation provided with a duct, especially to a transformer or encapsulated switchgear, having an insulating body (28) of elastic plastic, preferably silicon rubber, and a metallic housing with two half shells (10, 11) which surrounds the insulating body (28), characterised in that the housing has two individual half shells (10, 11) which can be detachably connected on the cable side by means of a push-on or screw-on ring or such like (12) and which can be detachably connected on the installation side by means of in each case at least one positive-locking connecting device (14) provided in the region of the joint to each housing half shell (10, 11), and in that the positive-locking connection of joints running in straight lines in the region near the installation, is produced by means of connecting devices (14d, 14e) arranged at the joints and located opposite one another, which lock into one another by axial movement of the housing half shells (10, 11).

5. Fitting according to Claim 4, characterised in that the connecting devices have the shape of a wedge (14d) extending parallel to the joint or a matching wedge slot (14e).

6. Fitting according to one of the preceding claims, characterised in that the positive-locking connection is formed from a plurality of individual hook devices (14c) fitted along the joint (19 or 22).

7. Fitting according to one of the preceding claims, characterised in that the connection of the two half shells (10, 11) on the cable side is produced by a ring with a bayonet closure (12), which can be fitted separately and surrounds the two half shells.

8. Fitting according to one of the preceding claims, characterised in that ribs or such like (24), which are integrally formed on the half shells (10, 11) and run parallel to the longitudinal axis, are provided for making contact between the housing and the external conductive layer (26) of the insulating body (28).

9. Fitting according to one of the preceding claims, characterised in that four to six ribs (24) are distributed at approximately equal intervals on the inner circumference of the housing or of the housing half shells (10, 11) and have a depth of approximately 1 to 4 mm directed towards the insulating body (28).

10. Fitting according to one of the preceding claims, characterised in that the housing half shells (10, 11) have a wall thickness of 2 to 5 mm and are produced from an aluminium-silicon casting.

11. Fitting according to one of the preceding claims, characterised in that the housing half shells (10, 11) are flattened in the region of the equipment connecting axis on two sides (30) opposite one another, such that the inner surface of the housing touches the external conductive layer (26) of the insulating body (28) and at the same time produces a particularly compact type of construction.

12. Fitting according to Claim 11, characterised in that ribs (24) are provided only in the region of the part located at right angles to the equipment connecting axis.

13. Fitting according to one of the preceding claims, characterised in that the housing half shells (10, 11) have a radially surrounding shoulder (32) in the connecting region with an externally located lobe (34), for holding claws or such like (35) which grip over the shoulder (32), of a mounting device (36) for mounting on the duct of the electrical installation.

**Revendications**

1. Raccord préfabriqué pour raccorder un câble pour courant fort, blindé et isolé par de la matière plastique, à une installation électrique munie d'une traversée, notamment à un transformateur ou à une installation de commutation étanche, comportant un élément isolant (28) en matière plastique élastique, de préférence en caoutchouc silicone, et un corps métallique ayant deux demi-coquilles (10, 11), qui entoure l'élément isolant (28), caractérisé par le fait que le corps possède deux demi-coquilles individuelles (10, 11) qui peuvent être assemblées, avec possibilité de démontage, côté câble au moyen d'un anneau emboîtable ou vissable ou analogue (12) et côté installation au moyen d'au moins un organe d'assemblage (14) par conjugaison de formes prévu sur chaque demi-coquille (10, 11) dans la région du joint d'assemblage, et par le fait que, dans le cas d'un raccord ou accessoire en forme de T ou d'équerre, les organes d'assemblage par conjugaison de formes (14, 14c) sont agencés en vis-à-vis dans un joint d'assemblage (19, 22) s'étendant du côté frontal, parallèlement à l'axe de raccordement à l'appareil.

2. Raccord selon revendication 1, caractérisé par le fait que les organes d'assemblage par conjugaison de formes (14) sont réalisés en tant que moyens d'agrafage, de façon telle qu'une aile (14a) de la première demi-coquille (11) du corps, dirigée vers l'extérieur, sensiblement à angle droit le long du joint d'assemblage, puisse être mise en prise avec une rainure de configuration correspondante (14b) de l'autre demi-coquille (10) du corps.

3. Raccord selon revendication 2, caractérisé par le fait que les moyens d'agrafage (14) s'étendent rectilinéairement, en ne formant qu'une seule pièce, sur une partie du joint d'assemblage (respectivement 19 ou 22) s'étendant parallèlement à l'axe de raccordement de l'appareil.

4. Raccord préfabriqué pour raccorder un câble pour courant fort, blindé et isolé par de la matière plastique, à une installation électrique, notamment à un transformateur ou à une installation de commutation étanche, munie d'une traversée, comportant un élément isolant (28) en matière plastique élastique, de préférence en caoutchouc silicone, et un corps métallique ayant deux demi-coquilles (10, 11), qui entoure le corps isolant (28), caractérisé par le fait que le corps possède deux demi-coquilles individuelles (10, 11) qui peuvent être assemblées avec possibilité de démontage, côté câble au moyen d'un anneau emboîtable ou vissable ou analogue (12) et côté installation au moyen d'au moins un organe d'assemblage (14) par conjugaison de formes prévu sur chaque demi-coquille (10, 11) dans la région du joint d'assemblage, et par le fait que l'assemblage par conjugaison de formes s'effectue dans la région de joints rectilignes, proche de l'installation, au moyen d'organes d'assemblage qui sont disposés dans cette zone, sont en vis-à-vis et peuvent être enclenchés l'un dans l'autre (14d, 14e) par glissement axial des demi-coquilles (10, 11) du corps.

5. Raccord selon revendication 4, caractérisé par le fait que les organes d'assemblage présentent respectivement la forme d'une clavette (14d) s'étendant parallèlement au joint d'assemblage et d'une rainure de clavette (14e) correspondante.

6. Raccord selon l'une des revendications précédentes, caractérisé par le fait que l'assemblage par conjugaison de formes est constitué par plusieurs organes d'accrochage individuels (14c) agencés le long du joint d'assemblage (19, 22).

7. Raccord selon l'une des revendications précédentes, caractérisé par le fait que l'assemblage côté câble des deux demi-coquilles (10, 11) est réalisé par un anneau individuel rapporté entourant les deux demi-coquilles avec un verrouillage du type à baïonnette (12).

8. Raccord selon l'une des revendications précédentes, caractérisé par le fait que, pour la mise en contact du corps et de la couche conductrice extérieure (26) de l'élément isolant (28), il est prévu des nervures ou analogues (24), formées sur les demi-coquilles (10, 11), s'étendant parallèlement à l'axe longitudinal.

9. Raccord selon l'une des revendications précédentes, caractérisé par le fait que quatre à six nervures (24) sont réparties à intervalles sensiblement égaux sur la périphérie intérieure du corps ou des demi-coquilles du corps (10, 11), et présentent une profondeur de l'ordre de 1 à 4 mm en direction de l'élément isolant (28).

10. Raccord selon l'une des revendications précédentes, caractérisé par le fait que les demi-coquilles (10, 11) du corps présentent une épaisseur de 2 à 5 mm et sont réalisées en aluminium-silicium moulé.

11. Raccord selon l'une des revendications précédentes, caractérisé par le fait que dans la région de l'axe de raccordement de l'appareil les demi-coquilles (10, 11) du corps sont aplaties en deux côtés opposés (30) de manière que la surface intérieure du corps touche la couche conductrice extérieure (26) du corps isolant (28) et que l'on obtienne en même temps une construction particulièrement compacte.

12. Raccord selon revendication 11, caractérisé par le fait que des nervures (24) ne sont présentes que dans la région de la partie disposée perpendiculairement à l'axe de raccordement de l'appareil.

13. Raccord selon l'une des revendications précédentes, caractérisé par le fait que dans la zone de raccordement, les demi-coquilles (10, 11) de l'appareil présentent un épaulement radial et circonférentiel (32) doté d'un saillant extérieur (34) pour recevoir des griffes ou analogues (35) qui s'engagent sur l'épaulement et appartiennent à un organe de fixation (36) pour la fixation à la traversée de l'installation électrique.

**Fig. 1**

EP 0 194 645 B1

**Fig. 2**

9

Fig. 3

14

10    14b    14a    11

Fig. 4

24

26

11

10

28    24

**Fig. 5**

**Fig. 6**

Fig. 7

14 e

8

14 d

8

10

15

11

Fig. 8

15

10

14 d

11